Europäisches Patentamt

**European Patent Office**

Office européen des brevets

(19)

(11) Numéro de publication : **0 130 920**
B1

(12) **FASCICULE DE BREVET EUROPÉEN**

(45) Date de publication du fascicule du brevet :
25.05.88

(51) Int. Cl.⁴ : **C 04 B 26/12** // (C04B26/12, 14:38, 40:00)

(21) Numéro de dépôt : **84401403.5**

(22) Date de dépôt : **03.07.84**

(54) **Composite haute densité à base de fibres minérales discontinues.**

(30) Priorité : **05.07.83 FR 8311164**

(43) Date de publication de la demande :
**09.01.85 Bulletin 85/02**

(45) Mention de la délivrance du brevet :
**25.05.88 Bulletin 88/21**

(84) Etats contractants désignés :
**BE CH DE FR GB IT LI LU NL SE**

(56) Documents cités :
**FR-A- 2 475 970**
**US-A- 4 073 230**
**CHEMICAL ABSTRACTS, vol. 93, no. 14, octobre 1980, page 263, no. 136737y, Columbus, Ohio, USA; & JP - A - 80 62259 (ASAHI FIBER GLASS CO., LTD.) 10-05-1980**
**CHEMICAL ABSTRACTS, vol. 95, no. 6, 10 août 1981, page 306, no. 47989f, Columbus, Ohio, USA; & PL - A - 107 654 (CENTRALNY OSRODEK BADAWCZO-ROZWOJOWY PRZEMYSLU IZOLACJI BUDOWLANEJ, PL), 29-11-1980**
**CHEMICAL ABSTRACTS, vol. 99, no. 22, 1983, page 285, no. 180450x, Columbus, Ohio, USA; & JP - A - 58 70760 (ASAHI FIBER GLASS CO., LTD.) 27-04-1983**
Le dossier contient des informations techniques présentées postérieurement au dépôt de la demande et ne figurant pas dans le présent fascicule.

(73) Titulaire : **ISOVER SAINT-GOBAIN**
**Les Miroirs 18, avenue d'Alsace**
**F-92400 Courbevoie (FR)**

(72) Inventeur : **Rias, Jean-Claude**
**23 Domaine des Guérandes Medan**
**F-78670 Villennes Sur Seine (FR)**

(74) Mandataire : **Muller, René et al**
**SAINT-GOBAIN RECHERCHE 39, quai Lucien Lefranc**
**F-93304 Aubervilliers (FR)**

EP 0 130 920 B1

Jouve, 18, rue St-Denis, 75001 Paris, France

## Description

La présente invention concerne une feuille composite de haute densité à base de fibres minérales discontinues, telles que des fibres de verre, de roche.

Le mot feuille selon l'invention englobe aussi bien des éléments de longueurs déterminées telles des plaques, que des rubans continus de longueur indéterminée.

Les fibres minérales discontinues et notamment les fibres de verre sont utilisées généralement pour l'isolation thermique et éventuellement phonique. A cet effet elles se présentent sous forme de matelas ou feutres de faible densité, liées entre elles par une résine polymérisée. Ces matelas contiennent généralement plus de 70 % en poids de fibres de verre, le reste étant constitué du liant polymérisé, leur masse volumique apparente est d'environ 10 kg/m³.

Des primitifs à base de fibres minérales peuvent aussi être utilisés comme élément de départ pour la fabrication de panneaux moulés tels des garnitures de pavillons d'automobiles, des panneaux acoustiques, des sous-capots de véhicules automobiles etc... Pour cette application ils sont associés à une ou plusieurs feuilles de revêtement et l'ensemble de ces éléments est soumis à une opération de moulage sous pression à température élevée afin d'obtenir la forme désirée pour le panneau, la polymérisation du liant et le collage entre eux des éléments constitutifs dudit panneau. L'âme constituée à partir de primitif de fibres minérales présente après moulage, une masse volumique apparente moyenne relativement élevée mais qui reste généralement inférieure à 200 kg/m³. Bien que plus rigide que les feutres, cette âme présente des propriétés mécaniques telles que la contrainte à la rupture, le module d'élasticité, la résistance à la traction, peu élevées.

Dans un domaine technique différent, celui des matières plastiques renforcées par la fibre de verre, on utilise généralement des fibres de verre continues, en tant qu'armature de renforcement. Mais on connaît, d'après la publication de brevet français 2 248 154, un matériau composite armé de fibres de verre qui utilise des fibres discontinues. Pour fabriquer ce matériau, on forme une nappe de fibres discontinues, on applique sur cette nappe une matière durcissable liquide ou semi-liquide formée d'une résine synthétique, et on comprime la nappe fibreuse et la matière durcissable afin d'imprégner la nappe de cette matière et obtenir une feuille ébauche que l'on peut ensuite utiliser pour le moulage. La feuille ébauche contient entre 30 et 60 % en poids de fibres de verre, le reste étant essentiellement la résine synthétique. Les propriétés mécaniques obtenues sont sensiblement comparables à celles d'autres matériaux plastiques renforcées. Mais ces matériaux plastiques renforcés sont relativement chers. En outre, ils présentent une sensibilité aux variations de la température. Ils peuvent enfin présenter un fluage sous la charge.

Le document FR-A-2 475 970 décrit un procédé pour la fabrication selon la technique papetière en milieu aqueux d'un carton minéral à partir de fibres minérales ayant un diamètre compris entre 20 et 300 µm. Le produit obtenu est un carton thermoformé, non poreux.

On connaît encore d'après l'abrégé du Chemical Abstract vol. 95 n° 6, du 10 août 1981, page 306 n° 47989 f, un panneau à base de fibres minérales présentant à la fois des propriétés d'isolant acoustique et d'isolant thermique, la masse volumique apparente étant comprise entre 200 et 400 kg/m³.

L'invention propose un nouveau produit présentant à la fois des propriétés mécaniques satisfaisantes en même temps qu'une stabilité dimensionnelle exceptionnelle aussi bien aux conditions d'humidité qu'aux charges, ces propriétés lui permettant d'être utilisé avec avantages dans des applications très diverses.

Le produit selon l'invention est une feuille composite à base de fibres minérales discontinues liées entre elles par un liant polymérisé, ayant une teneur en fibres supérieure à 70 % du poids total des fibres et du liant, une masse volumique généralement comprise entre 400 et 1500 kg/m³, cette feuille composite étant formée à partir d'au moins un primitif de fibres minérales de verre ou de roche ayant un diamètre moyen compris entre 2 et 15 µm environ, obtenu par les procédés classiques de fabrication de feutre ou matelas d'isolation, que l'on comprime fortement à une température assurant la polymérisation du liant.

Outre les avantages déjà décrits, la feuille composite selon l'invention de part sa structure poreuse est généralement plus légère que les matières plastiques renforcées par la fibre. Elle est moulable. Tout en ayant une grande rigidité, elle présente une bonne élasticité. La feuille présente une bonne menuisabilité, c'est-à-dire qu'elle peut être sciée, percée, clouée aisément, sans formation d'éclats ni déformations. Elle présente en outre une bonne résistance au poinçonnement. Elle peut être associée à des éléments les plus divers et être ainsi utilisée dans de nombreuses applications.

Comme indiqué précédemment, la feuille provenant d'un primitif d'isolation est formée essentiellement de fibres minérales discontinues, à raison de plus de 70 % du poids total des fibres et du liant, le reste dans le cas notamment des fibres de verre étant généralement le liant employé habituellement dans les matelas ou feutres d'isolation, par exemple une résine thermodurcissable telle que les résines formo-phénoliques, les résines mélamine-formol, les résines urée-formol.

Un autre avantage de la feuille selon l'invention est que provenant d'un primitif d'isolation, sa fabrication utilise une technologie partiellement bien connue.

Parmi les applications envisagées pour la feuille composite selon l'invention, on peut citer des applications dans le bâtiment telles que parements structuraux intérieur et/ou extérieur d'un composant complexe d'isolation, élément de plafond, élément de cloison, des applications hors bâtiment telles qu'élément de stratifié dans l'ameublement, dans le caravaning, élément d'emballage, de décoration, coque, etc...

La feuille composite selon l'invention présente une épaisseur d'environ 0,1 à 30 mm et généralement de 1 à 10 mm selon les applications envisagées et selon l'épaisseur du ou des primitifs de départ et des pressions exercées au moment du moulage.

Toujours selon les applications envisagées pour la feuille, on peut ajouter au liant certains adjuvants.

Ainsi, dans une réalisation avantageuse de la feuille, on introduit dans la composition une huile de silicone, par exemple du polydiméthylsiloxane, à raison d'environ 1 % en poids de la feuille. Cet ajout améliore de façon surprenante certaines propriétés mécaniques telle la résistance à la traction.

La feuille composite est avantageusement utilisée en tant que parements intérieur et extérieur d'un panneau porteur ou auto-portant comprenant en outre une âme isolante cellulaire sur laquelle sont collés lesdits parements. Malgré une faible épaisseur, de l'ordre de 0,1 a 10 mm et de préférence de 2 à 4 mm, la feuille utilisée en tant que parement permet au panneau de remplir efficacement notamment les fonctions suivantes de parement intérieur, c'est-à-dire qu'il est prêt à recevoir les finitions intérieures, de contre-liteaunage, c'est-à-dire qu'il peut recevoir les liteaux pour répondre à tous les types de couvertures en petits éléments.

Dans cette application, elle se substitue avec avantages aux panneaux de particules de bois. En particulier, elle présente un module d'élasticité d'environ 40 000 daN/cm², plus élevé que celui d'un panneau de particules de bois, qui est d'environ 15 000 à 25 000 daN/cm², ce qui se traduit par une meilleure résistance à la flexion du panneau porteur utilisant la feuille selon l'invention. Elle présente également une meilleure résistance à la traction, d'environ 200 à 230 daN/cm² contre 135 daN/cm².

Le comportement à l'eau qui est un critère de choix déterminant, est bien supérieur à celui d'un panneau de particules de bois. En particulier, la feuille composite selon l'invention n'est pas hygroscopique comme c'est le cas d'un panneau de particules de bois. Elle ne subit aucune variation dimensionnelle du fait des variations de l'humidité de l'air. On peut donc envisager un type de joint classique entre panneau, avec bande plus enduit.

Bien que présentant une masse volumique apparente sensiblement égale à celle d'un panneau de particules de bois, elle peut être utilisée dans une épaisseur de 2 mm de façon équivalente à un panneau de particules de bois de 12 mm d'épaisseur nécessaire en raison de problème de résistance au feu, ce qui permet un gain de poids considérable pour le panneau composant, d'où une facilité de mise en œuvre.

D'autres adjuvants peuvent être incorporés à la composition de la feuille selon l'invention. On peut ainsi incorporer des charges telles que le carbonate de calcium ou autres charges utilisées généralement dans les industries des matières plastiques, afin d'améliorer certaines propriétés mécaniques, telles que la résistance aux chocs, la résistance au feu, la résistance à la compression, etc... On peut y incorporer des produits hydrofuges connus en soi pour améliorer la résistance à l'eau ou à la vapeur d'eau, également des fibres non minérales telles que par exemple, fibres de bois, de matières plastiques en vue de modifier certaines caractéristiques de la feuille, des pigments pour la coloration dans la masse.

Les fibres minérales discontinues qui conviennent sont toutes les fibres usuelles d'isolation, c'est-à-dire des fibres de verre ou de roche, d'un diamètre moyen généralement compris entre 2 et 15 μm.

Sous un des aspects de l'invention, la feuille peut présenter une structure stratifiée. On peut ainsi préparer la feuille à partir de deux primitifs, ou plus, de fibres de verre et/ou de roche, que l'on presse simultanément comme indiqué plus en détail par la suite.

La structure stratifiée peut comprendre une armature tel un grillage, des fils, pris en sandwich ou non entre deux primitifs de même nature ou non.

Dans le même esprit, la feuille composite selon l'invention peut être munie au moment de sa fabrication par pressage, de feuilles de revêtement, telles que papier kraft, film de matière plastique, textile tissé ou non, film métallique, film en bois d'essences diverses.

Sous un autre aspect de l'invention, la feuille peut présenter des formes moulées variables et/ou des impressions de surface. C'est en effet un des avantages de la feuille de se prêter facilement à des formes de moulage diverses et à l'incorporation d'inserts lors du moulage.

Pour la plupart des applications de la feuille selon l'invention, sa masse volumique apparente est avantageusement comprise entre 600 kg/m³ et 1 100 kg/m³. Cette fourchette représente un bon compromis entre les propriétés mécaniques de la feuille et les conditions de sa fabrication.

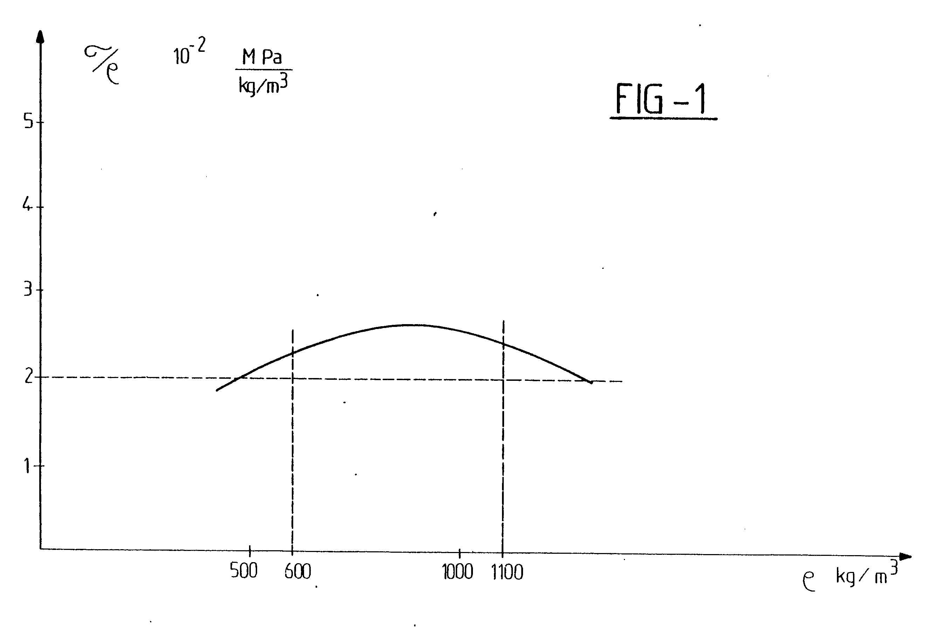

La figure 1 représente l'évolution du rapport a/ρ c'est-à-dire de la contrainte de traction à la rupture par la masse volumique en fonction de cette masse volumique ρ. Cette courbe qui met en évidence la résistance par unité de masse de la feuille semble indiquer que les meilleures valeurs sont obtenues pour des valeurs de masses volumiques comprises entre 600 et 1 100 kg/m³, ce qui confirme la fourchette préférée.

Sous un des aspects de l'invention, la feuille composite à base de fibres minérales discontinues, liées entre elles par un liant polymérisé présente une valeur a/ρ en fonction de ρ supé-

rieure à 2.10⁻² MPa × m³/kg.

L'invention concerne également un procédé pour fabriquer la feuille composite.

Selon l'invention, le procédé met en oeuvre des pressions importantes, de l'ordre de 1 à 100 bars, plus généralement de 10 à 50 bars, associés à des températures variables selon la nature du liant et ce durant un temps généralement variable bien que de l'ordre de 1 minute environ. Par exemple lorsque le liant est une résine formophénolique, la température utilisée est généralement de 200 °C pendant environ 1 minute.

Une caractéristique du procédé lorsqu'on utilise un liant thermodurcissable est un pressage rapide afin d'éviter une prépolymérisation du liant avant la mise à dimension définitive.

Le procédé peut être discontinu. Ainsi on peut placer un ou plusieurs primitifs de fibres minérales que l'on a obtenus par les procédés classiques de fabrication de feutre ou matelas d'isolation avant polymérisation du liant, dans une presse pour ensuite leur appliquer les conditions de pressage décrites précédemment.

On peut encore opérer de façon continue. A cet effet, on peut par exemple faire passer le primitif continu, obtenu après fibrage entre les bandes d'une presse à double bande, la température nécessaire à la polymérisation étant fournie par un appareillage annexe et/ou les bandes chauffées étant entendu qu'il faut éviter une prépolymérisation avant la mise à dimension définitive.

D'autres avantages et caractéristiques de l'invention apparaîtront dans la description suivante d'exemples de fabrication de feuilles.

### Exèmple 1

On fabrique une feuille thermocomprimée selon l'invention, de 2 mm d'épaisseur, de la façon suivante :

On utilise un primitif de fibres de verre d'isolation, d'une masse surfacique de 1 400 g/m², obtenu par les méthodes de fibrage classiques et pour lequel le liant représentant 20 % en poids du primitif est une résine formo-phénolique. Le primitif est placé entre les plateaux d'une presse.

On comprime fortement en exerçant une pression de 10 bars, à une température de 200 °C pendant une minute. On obtient une feuille d'une masse volumique d'environ 700 kg/m³ présentant des propriétés mécaniques satisfaisantes et notamment une contrainte de traction à la rupture $a_r$ de $1,7\ 10^7$ N/m², un allongement à la rupture $\varepsilon_r$ de 0,53 %, un module de Young de $2,35\ 10^9$ N/m².

Cette feuille présente une stabilité dimensionnelle exceptionnelle dans des conditions d'humidité très variables.

Cette feuille peut être utilisée comme parement intérieur et parement extérieur d'un panneau composite isolant comprenant en outre, en sandwich entre ces deux parements une âme cellulaire d'épaisseur variable selon l'isolation désirée, par exemple de 120 mm d'épaisseur en polystyrène expansé de masse volumique d'environ 25 kg/m³.

A cet effet la feuille selon l'invention est collée sur l'âme cellulaire de chaque côté, à l'aide d'une colle contact par exemple.

Le panneau composite formé présente un ensemble de caractéristique qui lui procure un comportement mécanique, un comportement au feu et un comportement à l'eau meilleurs que ceux obtenus avec un composant utilisant deux panneaux de particules de bois en tant que parements.

### Exemple 2

On fabrique une feuille thermocomprimée selon l'invention, de 4 mm d'épaisseur, de la façon suivante :

Entre les plateaux d'une presse on superpose 3 primitifs de fibres de verre d'isolation, d'une masse surfacique de 1 200 g/m² obtenus par les méthodes de fibrages classiques, pour lesquels le liant représentant 20 % en poids du primitif est une résine formo-phénolique.

On comprime l'ensemble pour obtenir une feuille de 4 mm d'épaisseur en chauffant pendant 1 minute. La masse volumique apparente est d'environ 900 kg/m³.

Après démoulage, la feuille obtenue présente les caractéristiques mécaniques suivantes :

une contrainte de traction à la rupture $a_r$ de $2,95\ 10^7$ N/m²,

un allongement à la rupture $\varepsilon_r$ de 0,42 %,

un module de Young E de $7,95\ 10^9$ N/m².

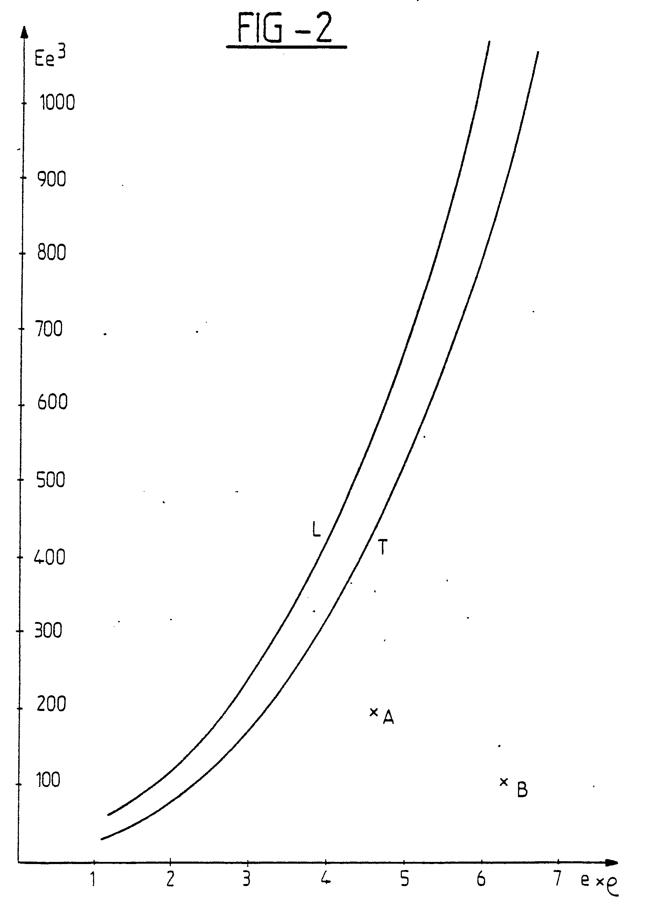

La feuille selon l'invention présente une rigidité très importante. La courbe de la figure 2 est représentative de la rigidité, c'est-à-dire du produit $Ee^3$ du module de Young E par le cube de l'épaisseur e, pour une épaisseur de 4 mm en fonction de la masse surfacique, exprimée par le produit $e \times \rho$. La courbe L représente la rigidité longitudinale, la courbe T la rigidité transversale. Cette courbe montre que la rigidité croît avec la masse surfacique, mais encore que cette rigidité est plus importante que celle d'une plaque de 2,5 mm d'épaisseur de matière plastique renforcée par de la fibre de verre, du type SMC (point A), et également plus importante que celle d'une plaque de 0,8 mm d'épaisseur en acier (point B).

### Revendications

1. Feuille composite à base de fibres de verre ou de roche discontinues, liées entre elles par un liant polymérisé, formée à partir d'au moins un primitif de fibres de verre ou de roche obtenu par les procédés classiques de fabrication de feutres ou matelas d'isolation avec incorporation du liant au moment du fibrage, les fibres de verre ou de roche ayant un diamètre moyen compris entre 2 et 15 μm environ, caractérisée en ce que le primitif est comprimé fortement à une température assurant la polymérisation du liant et en ce que la feuille composite présente une teneur en fibres minérales supérieure à 70 % du poids total des fibres et du liant, une masse volumique comprise entre 400 et 1 500 kg/m³ et une structure poreuse.

2. Feuille composite selon la revendication 1, caractérisée en ce que les fibres minérales sont des fibres de verre et que la teneur en fibres est supérieure à 70 % en poids.

3. Feuille selon une des revendications 1 ou 2, caractérisée en ce que le liant est une résine thermodurcissable choisie parmi les résines formo-phénoliques, les résines mélamine-formol, les résines urée-formol.

4. Feuille selon une des revendications 1 à 3, caractérisée en ce qu'elle comprend des adjuvants tels que des charges, des produits hydrofuges, des pigments.

5. Feuille selon une des revendications 1 à 4, caractérisée en ce que sa masse volumique est comprise entre 600 et 1 100 kg/m³.

6. Feuille composite selon la revendication 1, caractérisée en ce qu'elle présente une valeur $\sigma/\rho$ en fonction de $\rho$ supérieure à $2.10^{-2}$ MPa m³/kg.

7. Feuille selon une des revendications 1 à 6, caractérisée en ce qu'elle présente une structure stratifiée obtenue par pressage.

8. Feuille selon une des revendications 1 à 6, caractérisée en ce qu'elle présente des formes moulées variables.

9. Feuille selon une des revendications 1 à 8, caractérisée en ce qu'elle présente des impressions de surface.

10. Procédé de fabrication d'une feuille composite à base de fibres minérales discontinues selon une des revendications 1 à 8, caractérisé en ce qu'on comprime fortement au moins un primitif de fibres minérales discontinues d'isolation sous une pression comprise entre 0,1 et 10 MPa (1 et 100 bars) et de préférence comprise entre 1 et 5 MPa (10 et 50 bars) à une température dépendante du liant et durant au moins environ 1 minute.

11. Application de la feuille composite selon une des revendications 1 à 9 à la réalisation d'un panneau utilisé notamment dans le bâtiment, ladite feuille ayant une épaisseur comprise entre 0,1 et 10 mm.

## Claims

1. Composite sheet having a base of discontinuous rock or glass fibres bound to each other by a polymerised binder which is formed from at least one basic component glass or rock fibres obtained by the conventional processes for producing insulation felts or mats with the incorporation of the binder when the fibres are drawn out, whereby the rock or glass fibres have a mean diameter of between approximately 2 and 15 μm, characterised in that the basic component is compressed powerfully at a temperature which ensures the polymerisation of the binder and in that the composite sheet has a content of mineral fibres which is greater than 70 % of the total weight of the fibres and the binder, a density of between 400 and 1 500 kg/m³ and a porous structure.

2. Composite sheet according to claim 1, characterised in that the mineral fibres are glass fibres and in that the fibre content is greater than 70 % by weight.

3. Sheet according to one of the claims 1 or 2, characterised in that the binder consists of a thermosetting resin chosen from among the formo-phenolic resins, the melamine formaldehyde resins and the urea formaldehyde resins.

4. Sheet according to one of claims 1 to 3, characterised in that it includes additives such as fillers, water-repellent products and pigments.

5. Sheet according to one of claims 1 to 4 characterised in that its density is between 600 and 1 100 kg/m³.

6. Composite sheet according to claim 1, characterised in that it has a value $\sigma/\rho$ in relation to $\rho$ greater than $2.10^{-2}$ MPa m³/kg.

7. Sheet according to one of claims 1 to 6, characterised in that it has a laminated structure obtained by pressing.

8. Sheet according to one of claims 1 to 6, characterised in that it has variable moulded shapes.

9. Sheet according to one of claims 1 to 8, characterised in that it has surface impressions.

10. Process for manufacturing a composite sheet with a discontinuous mineral fibre base according to one of claims 1 to 8, characterised in that at least one basic component of insulating discontinuous mineral fibres is compressed strongly under a pressure of between 0.1 and 10 MPa (1 and 100 bars) and for preference between 1 and 5 MPa (10 and 50 bars) at a temperature depending on the binder and for a period of aproximately one minute at least.

11. Use of the composite sheet according to one of claims 1 to 9 for producing a panel for use particularly in the building industry, the said sheet having a thickness of between 0.1 and 10 mm.

## Patentansprüche

1. Verbundfolie auf der Basis von diskontinuierlichen Glas- oder Steinfasern, die untereinander durch ein polymerisiertes Bindemittel verbunden sind, welche ausgehend von wenigstens einem Glasfaser- oder Steinfaserausgangsstoff gebildet ist, der durch klassische Herstellungsverfahren von Dämmfilzen oder Dämmatten unter Einbringung des Bindemittels zum Zeitpunkt der Zerfaserung erhalten wird, wobei die Glas- oder Steinfasern einen mittleren Durchmesser von ungefähr 2 bis 15 μm aufweisen, dadurch gekennzeichnet, daß der Ausgangsstoff stark bei einer Temperatur komprimiert ist, die die Polymerisation des Bindemittels sicherstellt, und daß die Verbundfolie einen Mineralfasergehalt, der größer ist als 70 % des Gesamtgewichts von Fasern und Bindemittel, eine Rohdichte von 400 bis 1 500 kg/m³ und eine poröse Struktur aufweist.

2. Verbundfolie nach Anspruch 1, dadurch gekennzeichnet, daß die Mineralfasern Glasfasern sind, und daß der Fasergehalt größer ist als 70 Gewichts-%.

3. Verbundfolie nach Anspruch 1 oder 2, dadurch gekennzeichnet, daß das Bindemittel ein wärmeaushärtendes Harz ist, das unter den Phenolformaldehydharzen, den Melaminformaldehydharzen, den Harnstoffformaldehydharzen ausgewählt wurde.

4. Verbundfolie nach einem der Ansprüche 1 bis 3, dadurch gekennzeichnet, daß sie Zusatzstoffe aufweist, wie Chargen, wasserabweisende Produkte, Pigmente.

5. Verbundfolie nach einem der Ansprüche 1 bis 4, dadurch gekennzeichnet, daß seine Rohdichte zwischen 600 und 1 200 kg/m³ beträgt.

6. Verbundfolie nach Anspruch 1, dadurch gekennzeichnet, daß sie einen Wert $\sigma/\rho$ in Abhängigkeit von $\rho$ aufweist, der größer ist als $2.10^{-2}$ MPa m³/kg.

7. Verbundfolie nach einem der Ansprüche 1 bis 6, dadurch gekennzeichnet, daß sie eine Schichtstruktur aufweist, die durch Pressen erreicht wurde.

8. Verbundfolie nach einem der Ansprüche 1 bis 6, dadurch gekennzeichnet, daß sie unterschiedlich geformte Formen aufweist.

9. Verbundfolie nach einem der Ansprüche 1 bis 8, dadurch gekennzeichnet, daß sie Oberflächeneindrucke aufweist.

10. Verfahren zur Herstellung einer Verbundfolie auf der Basis von diskontinuierlichen Mineralfasern nach einem der Ansprüche 1 bis 8, dadurch gekennzeichnet, daß wenigstens ein diskontinuierlicher Mineralfaserausgangsdämmstoff unter einem Druck von 0,1 bis 10 MPa (1 bis 100 bar) und vorzugsweise zwischen 1 und 5 MPa (10 bis 50 bar) bei einer Temperatur stark komprimiert wird, die vom Bindemittel abhängig ist und das wenigstens ungefähr eine Minute dauert.

11. Verwendung der Verbundfolie nach einem der Ansprüche 1 bis 9 bei der Herstellung einer Platte, welche insbesondere am Bau verwendet wird, wobei die Verbundfolie eine Dicke zwischen 0,1 und 10 mm aufweist.

FIG -1

$\%$    $10^{-2}$    $\dfrac{MPa}{kg/m^3}$

0 130 920

FIG -2